# EUROPÄISCHE PATENTANMELDUNG

(11) **EP 1 352 823 A2**
(43) Veröffentlichungstag der Anmeldung: **15.10.2003**
(21) Anmeldenummer: 03008259.8
(22) Anmeldetag: 09.04.2003
(51) Int. Cl.: B62K 25/28

(54) **Zweiradrahmen, insbesondere Fahrradrahmen**

(30) Priorität: 10.04.2002 DE 20205539 U
(71) Anmelder: Derby Cycle Werke GmbH, 49661 Cloppenburg (DE)
(72) Erfinder: Malwitz, Ralf, 48155 Münster (DE)
(74) Vertreter: Jabbusch, Matthias, Dipl.-Ing.

(57) **Zusammenfassung**

Bei einem Zweiradrahmen, insbesondere Fahrradrahmen, mit einem ersten ein Oberrohr aufweisenden Rahmenteil und mit einem zweiten Rahmenteil, das eine Aufnahme für ein Rad des Zweirades hat und das am ersten Rahmenteil schwenkbar angelenkt ist, wobei das zweite Rahmenteil über zumindestens ein Federelement am ersten Rahmenteil federnd abgestützt ist, ist vorgesehen, daß das Oberrohr zumindest in einem Bereich seiner Längserstreckung in zumindestens zwei einen Bauraum zwischen sich einfassende Teilabschnitte aufgeteilt ist und daß das Federelement im Bauraum zwischen den Teilabschnitten angeordnet ist.

Dieser Zweiradrahmen gewährleistet eine einfacher zugängliche Anordnung des Federelementes.

## Beschreibung

Die Erfindung betrifft einen Zweiradrahmen, insbesondere einen Fahrradrahmen, mit einem ersten ein Oberrohr aufweisenden Rahmenteil und mit einem zweiten Rahmenteil, das eine Aufnahme für ein Rad des Zweirades hat und das am ersten Rahmenteil schwenkbar angelenkt ist, wobei das zweite Rahmenteil über zumindestens ein Federelement am ersten Rahmenteil federnd abgestützt ist.

Ein Zweiradrahmen, insbesondere ein Fahrradrahmen, dient zum Verbinden der wesentlichen Teile eines Zweirades, insbesondere eines Fahrrades. So sind an einem Fahrradrahmen regelmäßig die Räder des Fahrrades sowie weitere Bauteile, wie Sattel, Lenker und Tretlager angeordnet.

Um den Komfort während des Fahrens auf einem Zweirad, insbesondere auf einem Fahrrad, zu verbessern, sind gefederte Zweiräder vorgeschlagen worden. Gefederte Fahrräder weisen einen Fahrradrahmen auf, der wenigstens eine federnd gelagerte bzw. federnd schwenkbar angelenkte Baugruppe umfaßt. Diese Baugruppe ist beispielsweise ein zweites Rahmenteil, das an einem ersten Rahmenteil schwenkbar angelenkt ist und über ein Federelement an diesem ersten Rahmenteil abgestützt ist.

Auf diese Weise werden insbesondere Hinterräder von Fahrrädern gelagert. Ein erstes Rahmenteil umfaßt dabei ein Oberrohr sowie ein Sattelrohr und ein Unterrohr, während ein zweites Rahmenteil durch das Hinterrad tragende Streben, wie Kettenstreben und Oberstreben, ausgebildet ist.

Zur federnden Abstützung des zweiten Rahmenteils an dem ersten Rahmenteil werden Federelemente eingesetzt, die beispielsweise als Zylinder-Kolben-Anordnungen ausgebildet sind. Diese Federelemente werden mit ihren freien Enden am ersten Rahmenteil und am zweiten Rahmenteil befestigt, so daß sie eine federnde und/oder dämpfende Verbindung dieser beiden zueinander schwenkbaren bzw. bewegbaren Rahmenteile ausbilden.

Federelemente werden dabei häufig im Bereich des Tretlagers des Fahrrades angeordnet. An diesem Ort erfüllen sie zwar ihre Funktion, eine federnde Abstützung auszubilden. Jedoch sind sie an diesem Ort relativ tief angeordnet, so daß sie nur durch ein Bücken zu erreichen sind. Das Erreichen eines Federelementes ist deshalb von Bedeutung, weil Federelemente regelmäßig einstellbar bzw. blockierbar sind. Federelemente können beispielsweise auf verschiedene Härtegrade ihrer Federung eingestellt werden, zudem besteht auch die Möglichkeit, die Federwirkung ganz aufzuheben, indem das Federelement blockiert wird. Diese Blockade ist insbesondere dann notwendig, wenn das Fahrrad in einem Wiegetritt betrieben werden soll, denn bei fortdauernder Federwirkung wird ein Großteil der aus dem Wiegetritt resultierenden Kräfte durch das Federelement abgebaut.

Die tiefe Anordnung des Federelementes hat somit den Nachteil, daß das Federelement schwierig zugänglich ist.

Ein Fahrer hat vom Fahrrad abzusteigen, sich auf den Boden zu kauern und anschließend eine Veränderung vorzunehmen.

Der Erfindung liegt die Aufgabe zugrunde, einen Zweiradrahmen der eingangs genannten Gattung aufzuzeigen, der eine einfacher zugängliche Anordnung des Federelementes gewährleistet.

Diese Aufgabe ist erfindungsgemäß dadurch gelöst, daß das Oberrohr des Zweiradrahmens zumindestens in einem Bereich seiner Längserstreckung in zumindestens zwei einen Bauraum zwischen sich einfassende Teilabschnitte aufgeteilt ist und daß das Federelement im Bauraum zwischen den Teilabschnitten angeordnet ist.

Der erfindungsgemäße Zweiradrahmen weist ein Oberrohr auf, das regelmäßig relativ hoch über dem Erdboden angeordnet ist. Es bildet den oberen Abschluß des Fahrradrahmens aus, so daß es insbesondere von oben frei zugänglich ist. Erfindungsgemäß ist vorgesehen, daß dieses Oberrohr zumindestens in einem Bereich seiner Längserstreckung in vorzugsweise zwei Teilabschnitte aufgespreizt ist, die zwischen sich einen Bauraum ausbilden. Dieser Bauraum ist frei zugänglich.

Nach der Erfindung ist in dem Bauraum zwischen den Teilabschnitten des Oberrohrs das Federelement angeordnet. Das Federelement liegt damit in der Achse des Oberrohrs, so daß es wie das Oberrohr gut zugänglich ist. Ein auf dem Fahrrad sitzender Benutzer kann während der Fahrt das Oberrohr und somit auch das im Bauraum zwischen den Teilabschnitten des Oberrohrs angeordente Federelement erreichen, insbesondere um Verstellungen bzw. Blockierungen des Federelementes vorzunehmen. Beabsichtigt der Benutzer des Fahrrades, in den Wiegetritt zu wechseln, so kann er kurz vorher während der Fahrt das Federelement blockieren, um eine optimale Übertragung seiner aus dem Wiegetritt resultierenden Kräfte über das Fahrrad auf den Boden zu gewährleisten.

Durch die Anordnung des Federelementes in der Achse des Oberrohrs ist zudem eine gefällige Optik erreicht, da das Federelement quasi in das Oberrohr integriert ist. Die Aufteilung des Oberrohrs in Teilabschnitte bewirkt zudem eine Erhöhung der Steifigkeit des Oberrohrs. Das Federelement ist im Bauraum zwischen den Teilabschnitten zudem an einem schmutzgeschützten Ort angeordnet.

Nach einer ersten Weiterbildung der Erfindung ist vorgesehen, daß jeder Teilabschnitt des Oberrohrs rohrförmig ausgebildet ist. Die Teilabschnitte des Oberrohrs sind somit als Oberrohrstreben ausgebildet, die vorzugsweise etwa parallel zueinander angeordnet sind. Zwischen den Teilabschnitten des Oberrohrs ist dabei ein Abstand ausgebildet, der den Bauraum für die Anordnung des Federelementes zur Verfügung stellt. Der Abstand ist derart bemessen, daß voneinander verschiedene, marktübliche Federelemente im Bauraum jeweils angeordnet werden können.

In einem Übergangsbereich zwischen dem Oberrohr und den Teilabschnitten kann dabei zumindestens ein Verbindungsstück angeordnet sein. Dieses Verbindungsstück ist vorzugsweise aus dem gleichen Material hergestellt wie das Oberrohr und z. B. mittels Schweißverbindungen mit dem Oberrohr und mit den Teilabschnitten fest verbunden. Zugleich kann an diesem Verbindungsstück das Federelement angelenkt sein.

Eine nächste Weiterbildung der Erfindung sieht vor, daß das zweite Rahmenteil Oberstreben und Kettenstreben aufweist, wobei die Kettenstreben am ersten Rahmenteil schwenkbar angelenkt sind und wobei die Oberstreben am Federelement angelenkt sind. Die Beweglichkeit, insbesondere Schwenkbarkeit, des zweiten Rahmenteils gegenüber dem ersten Rahmenteil ist durch die konstruktive Anlenkung der das zweite Rahmenteil ausbildenden Streben erreicht. Die Streben tragen das Hinterrad und ermöglichen, daß das Hinterrad gegenüber dem ersten Rahmenteil federnd am Fahrrad aufgenommen ist. Eine entsprechende Aufnahme eines Rades ist auch bei Kleinkrafträdern, Mopeds oder anderen Zweirädern ermöglicht.

Die Anlenkung der Oberstreben an dem Federelement kann direkt ausgebildet sein. Insbesondere für den Fall, daß das erste Rahmenteil ein Sattelrohr aufweist, sieht eine Weiterbildung der Erfindung vor, daß die Oberstreben über zumindestens ein Zwischenbauteil am Federelement angelenkt sind. Das Zwischenbauteil leitet die Kraft zwischen Oberstreben und Federelement am Sattelrohr vorbei. Konstruktiv ist dafür vorzugsweise vorgesehen, daß das Zwischenbauteil ein am ersten Rahmenteil schwenkbar angeordneter Hebel ist, an welchem die Oberstreben und das Federelement angelenkt sind. Indem an diesem Hebel die Oberstreben und das Federelement angelenkt sind, können durch den Hebel die Kräfte zwischen diesen Bauteilen übertragen werden. Dazu ist der Hebel beispielsweise an einem Sattelrohr des ersten Rahmenteils schwenkbar angeordnet. Die Anordnung kann dabei am Sattelrohr direkt erfolgen, vorzugsweise ist jedoch am Sattelrohr ein Vorsprung angeordnet, beispielsweise angeschweißt, an dem der Hebel schwenkbar angeordnet ist.

Das dem Sattelrohr zugekehrte Ende des Federelementes ist in Fahrtrichtung des Fahrrades vor dem Sattelrohr angeordnet. Die Oberstreben enden dagegen in Fahrrichtung hinter dem Sattelrohr. Um diese Bauteile unter Umgehen des Sattelrohres miteinander in Kräfte übertragender Weise zu verbinden, sieht eine Weiterbildung der Erfindung vor, daß der Hebel etwa V-förmig ausgebildet ist, wobei er etwa mit dem Schnittpunkt der V-Schenkel am Sattelrohr bzw. am Vorsprung des Sattelrohrs schwenkbar angeordnet ist und wobei an einem V-Schenkel die Oberstreben schwenkbar angelenkt sind und wobei an dem anderen V-Schenkel das Federelement schwenkbar angelenkt ist. Der V-förmig ausgebildete Hebel ist dazu geeignet, das Sattelrohr zu umgehen. Dazu ist er mit dem Schnittpunkt der V-Schenkel am Sattelrohr bzw. am Vorsprung des Sattelrohres schwenkbar angelenkt. Durch dieses Anlenken sind die V-Schenkel um eine durch den Schnittpunkt der V-Schenkel verlaufende Achse schwenkbar. Die Achse verläuft beispielsweise durch einen Bolzen, mit dem der Hebel am Sattelrohr bzw. am Vorsprung angeordnet ist.

An die schwenkbaren V-Schenkel sind die Oberstreben und das Federelement angelenkt. Kräfte aus den Oberstreben können dadurch über die V-Schenkel auf das Federelement übertragen werden. Die Oberstreben und das Federelement sind vorzugsweise an den freien Enden der V-Schenkel angelenkt, um einen möglichst großen Hebelweg auszunutzen. An die V-Schenkel kann wenigstens eine Verstärkungsstrebe vorzugsweise einstückig angesetzt sein, welche die V-Schenkel miteinander verbindet.

Vorzugsweise sind zwei als baugleiche Hebel ausgebildete Zwischenbauteile vorgesehen, welche in zueinander paralleler Ausrichtung am Sattelrohr schwenkbar angeordnet sind. Die dem Federelement zugeordneten V-Schenkel dieser Hebel können dabei mit einem gemeinsamen Bolzen mit dem Federelement schwenkbar verbunden werden. An den anderen V-Schenkeln sind die Oberstreben angelenkt.

Als Federelemente können für den erfindungsgemäßen Zweiradrahmen verschiedene Typen mit und ohne Dämpfung eingesetzt werden. Vorzugsweise wird als Federelement ein Öl-Luft-Dämpfer eingesetzt, der für seine Ein- und Ausfederbewegung einen Maximalanschlag aufweist. Der Maximalanschlag definiert die Endschwenkpositionen des Schwenkbereiches des zweiten Rahmenteils gegenüber dem ersten Rahmenteil. Das Federelement mit dem Maximalanschlag ist dabei derart im Bauraum angeordnet, daß das dem Sattelrohr zugekehrte freie Ende des Federelementes nicht am Sattelrohr anschlägt.

Die als Hebel ausgebildeten Zwischenbauteile können einoder mehrteilig sein und aus verschiedenen Materialien ausgebildet sein, beispielsweise aus Aluminium, Magnesium, Stahl oder Karbon.

Ein Ausführungsbeispiel der Erfindung, aus dem sich weitere erfinderische Merkmale ergeben, ist in der Zeichnung dargestellt. Es zeigen:
- Fig. 1:: eine Seitenansicht eines Zweiradrahmens,
- Fig. 2:: eine Draufsicht des Oberrohrs des Zweiradrahmens gemäß Fig. 1 und
- Fig. 3:: eine perspektivische Teilansicht des Zweiradrahmens gemäß Fig. 1.

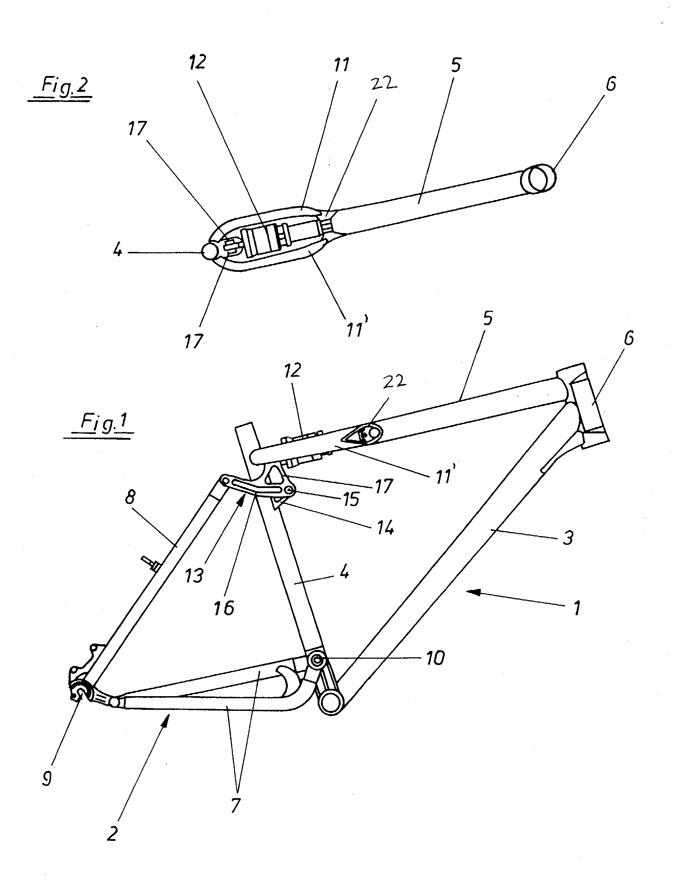

Der Zweiradrahmen in Fig. 1 ist aus einem ersten Rahmenteil 1 und einem zweiten Rahmenteil 2, das am ersten Rahmenteil 1 schwenkbar angelenkt ist, ausgebildet. Das erste Rahmenteil 1 besteht aus einem Unterrohr 3, einem Sattelrohr 4, einem Oberrohr 5 und einem Steuerkopf 6.

Das zweite Rahmenteil 2 besteht aus jeweils paarweise angeordneten Kettenstreben 7 und Oberstreben 8, die im Bereich eines Ausfallendes 9 miteinander verbunden sind. Die Kettenstreben 7 sind an dem Sattelrohr 4 in einem Drehgelenk 10 schwenkbar angelenkt. Aufgrund dieser Anlenkung ist das zweite Rahmenteil 2 um eine aus der Bildebene heraustretende Schwenkachse schwenkbar.

Insbesondere aus Fig. 2 ist ersichtlich, daß das Oberrohr 5 in einem Bereich seiner Längserstreckung in zwei Teilabschnitte 11, 11' aufgeteilt ist. Jeder Teilabschnitt ist wieder rohrförmig ausgebildet. Zwischen den Teilabschnitten 11, 11', die in einer Ebene parallel zueinander ausgerichtet sind, ist ein Bauraum ausgebildet. In diesem Bauraum ist ein Federelement 12 angeordnet. Die Verbindung zwischen dem Oberrohr 5 und den Teilabschnitten 11, 11' erfolgt durch ein profilartiges Verbindungsstück 22. Das Federelement 12 ist mit einem freien Ende am Verbindungsstück 22 angelenkt.

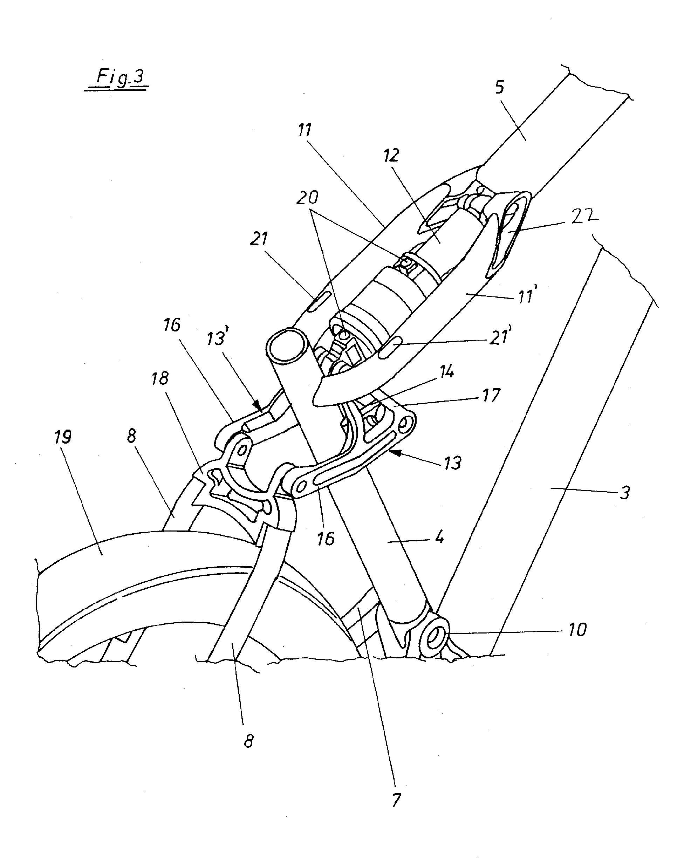

Mit dem Federelement 12 ist das zweite Rahmenteil 2 über seine Oberstreben 8 und über Zwischenbauteile in Kräfte übertragender Weise verbunden. Als Zwischenbauteile dienen Hebel 13, 13' (Fig. 3), die an einem Vorsprung 14 des Sattelrohrs 4 schwenkbar angeordnet sind. Die Anordnung erfolgt über einen Bolzen 15, durch den die Schwenkachse verläuft. Die Hebel 13, 13' sind dabei etwa V-förmig ausgebildet, wobei im Schnittpunkt der V-Schenkel 16, 17 die Anlenkung der Hebel 13, 13' an dem Vorsprung 14 erfolgt.

An den freien Enden der V-Schenkel 17 ist das Federelement 12 über einen Bolzen angelenkt. Auf der den V-Schenkeln 17 gegenüberliegenden Seite ist das Federelement 12 gleichfalls mit einem Bolzen mit dem Verbindungsstück 22 verbunden. Die anderen V-Schenkel 16 der Hebel 13 verlaufen am Sattelrohr 4 vorbei und sind mit ihren freien Enden über Bolzen mit den Oberstreben 8 verbunden.

Fig. 3 zeigt, daß die Oberstreben 8 durch ein Verbindungsprofil 18 vor der Anlenkung an den Hebeln 13, 13' zusammengeführt sind. Zwischen den Oberstreben 8 ist ein Hinterrad 19 des Fahrrades dargestellt.

Fig. 3 zeigt noch, daß das Federelement 12 Betätigungselemente 20 aufweist, welche von oben frei zugänglich sind. In den Teilabschnitten 11, 11' sind auf der Oberseite Langlöcher 21, 21' angeordnet, aus denen durch das Oberrohr 5 und durch die Teilabschnitte 11, 11' geführte strangförmige Bauelemente, wie Bowdenzüge für Bremsen oder Schaltwerke, herausgeführt werden können.

## Patentansprüche

1. Zweiradrahmen, insbesondere Fahrradrahmen, mit einem ersten ein Oberrohr aufweisenden Rahmenteil und mit einem zweiten Rahmenteil, das eine Aufnahme für ein Rad des Zweirades hat und das am ersten Rahmenteil schwenkbar angelenkt ist, wobei das zweite Rahmenteil über zumindestens ein Federelement am ersten Rahmenteil federnd abgestützt ist,
**dadurch gekennzeichnet,**
**daß** das Oberrohr (5) zumindestens in einem Bereich seiner Längserstreckung in zumindestens zwei einen Bauraum zwischen sich einfassende Teilabschnitte (11, 11') aufgeteilt ist und daß das Federelement (12) im Bauraum zwischen den Teilabschnitten (11, 11') angeordnet ist.

2. Zweiradrahmen nach Anspruch 1 **dadurch gekennzeichnet, daß** jeder Teilabschnitt (11, 11') des Oberrohrs (5) rohrförmig ausgebildet ist.

3. Zweiradrahmen nach Anspruch 1 oder 2, **dadurch gekennzeichnet, daß** in einem Übergangsbereich zwischen dem Oberrohr (5) und den Teilabschnitten (11, 11') zumindestens ein Verbindungsstück (22) angeordnet ist.

4. Zweiradrahmen nach einem der Ansprüche 1 bis 3, **dadurch gekennzeichnet, daß** das zweite Rahmenteil (2) Oberstreben (8) und Kettenstreben (7) aufweist, wobei die Kettenstreben (7) am ersten Rahmenteil (1) schwenkbar angelenkt sind und wobei die Oberstreben (8) am Federelement (12) angelenkt sind.

5. Zweiradrahmen nach Anspruch 4, **dadurch gekennzeichnet, daß** die Oberstreben (8) über zumindestens ein Zwischenbauteil am Federelement (12) angelenkt sind.

6. Zweiradrahmen nach Anspruch 5, **dadurch gekennzeichnet, daß** das Zwischenbauteil ein am ersten Rahmenteil (1) schwenkbar angeordneter Hebel (13, 13') ist, an welchem die Oberstreben (8) und das Federelement (12) angelenkt sind.

7. Zweiradrahmen nach Anspruch 6, **dadurch gekennzeichnet, daß** der Hebel (13, 13') an einem Sattelrohr (4) des ersten Rahmenteils (1) schwenkbar angeordnet ist.

8. Zweiradrahmen nach Anspruch 7, **dadurch gekennzeichnet, daß** am Sattelrohr (4) wenigstens ein Vorsprung (14) angeordnet ist, an dem der Hebel (13, 13') schwenkbar angeordnet ist.

9. Zweiradrahmen nach einem der Ansprüche 6 bis 8, **dadurch gekennzeichnet, daß** der Hebel (13, 13') etwa V-förmig ausgebildet ist, wobei er etwa mit dem Schnittpunkt der V-Schenkel (16, 17) am Sattelrohr (4) bzw. am Vorsprung (14) schwenkbar angeordnet ist und wobei an einem V-Schenkel (16) die Oberstreben (8) schwenkbar angelenkt sind und wobei an dem anderen V-Schenkel (17) das Federelement (12) schwenkbar angelenkt ist.

10. Zweiradrahmen nach einem der Ansprüche 5 bis 9, **dadurch gekennzeichnet, daß** zwei als baugleiche Hebel (13, 13') ausgebildete Zwischenbauteile vorgesehen sind, welche in zueinander paralleler Ausrichtung am Sattelrohr (4) schwenkbar angeordnet sind.

11. Zweiradrahmen nach einem der vorhergehenden Ansprüche, **dadurch gekennzeichnet, daß** das Federelement (12) ein Öl-Luft-Dämpfer ist, der für seine Ein- und Ausfederbewegung einen Maximalanschlag aufweist.

12. Zweiradrahmen nach einem der Ansprüche 6 bis 11, **dadurch gekennzeichnet, daß** der Hebel (13, 13') aus Aluminium gefertigt ist.
